Europäisches Patentamt

European Patent Office

Office européen des brevets

(11) Publication number: **0 043 273**
**B1**

(12) EUROPEAN PATENT SPECIFICATION

(45) Date of publication of patent specification: **16.05.84**

(51) Int. Cl.³: **C 08 L 55/02,** C 08 L 51/04, C 08 F 279/04

(21) Application number: **81302949.3**

(22) Date of filing: **29.06.81**

(54) Impact-resistant resin composition and a product produced from it.

(30) Priority: **27.06.80 JP 86651/80**

(43) Date of publication of application:
**06.01.82 Bulletin 82/01**

(45) Publication of the grant of the patent:
**16.05.84 Bulletin 84/20**

(84) Designated Contracting States:
**DE GB NL**

(56) References cited:
FR-A-1 387 102
GB-A-2 061 975

CHEMICAL ABSTRACTS, volume 72, 1970,
page 44, abstract 133733z COLUMBUS OHIO
(US) H. EBNETH "ABS polymers and rigid
polyurethane foams, a new sandwich material
for the construction of refrigeration
appliances"

(73) Proprietor: **JAPAN SYNTHETIC RUBBER CO., LTD.**
**11-24, Tsukiji-2-chome Chuo-ku**
**Tokyo (JP)**

(72) Inventor: **Abe, Mitsuo**
**1642-48, Ikuwacho**
**Yokkaichi-shi (JP)**
Inventor: **Kitagawa, Yozo**
**1, Morigayamacho**
**Yokkaichi-shi (JP)**
Inventor: **Tsutsumi, Tadahiko**
**22-8, Jike-5-chome**
**Suzuka-shi (JP)**
Inventor: **Kato, Tadashi**
**2017-5, Hachiojicho**
**Yokkaichi-shi (JP)**
Inventor: **Atomori, Seiichi**
**1, Morigayamacho**
**Yokkaichi-shi (JP)**

(74) Representative: **Tubby, David George et al**
**MARKS & CLERK 57-60 Lincoln's Inn Fields**
**London WC2A 3LS (GB)**

Courier Press, Leamington Spa, England.

# O 043 273

**Description**

The present invention relates to an impact resistant, rubber-reinforced resin composition which is particularly suitable for the production of the box body of refrigerators.

When moulded articles having a complicated shape and a large surface area (for example the inner box of a refrigerator) are made from a synthetic resin by vacuum forming, it is impossible to eliminate variations in thickness from one area to another even when a high quality forming technique is employed. As a result, heavy-gauge plates of synthetic resin have commonly been used for vacuum forming of such articles in order that the variations in thickness do not result in any part of the article being too thin. On the other hand, the general tendency in present-day moulding and processing industries is to use synthetic resin plates which are as thin as possible in order to conserve resources and reduce cost. However, of course, if such a light-gauge sheet is used for moulding an article, it is most desirable to develop a resin giving smaller variations in thickness from one area to another of the moulded article.

In general, the structure of the box body of a refrigerator comprises an inner box and an outer box separated by a heat-insulation material, which is, in most cases, produced by foam-moulding polyurethane, generally *in situ*. This, of course, makes use of the superiority of foamed polyurethane as a heat insulation material and, because the heat conductivity of foamed polyurethane is so much lower than that of glass fibre or of foamed polystyrene, the layer of insulating material can be thinner, thus permitting the effective internal volume of the refrigerator to be increased and/or energy to be saved. However, when the box body of a refrigerator is produced by this process, the inner box made of a synthetic resin comes into direct contact with the isocyanate compound and the polyol compound (which react together to form the polyurethane) and with the fluorocarbon gas (e.g. Freon — trade mark — gas) used as a foaming agent. Chemical corrosion of the synthetic resin used as the inner box can result from its contact with these starting materials and, as a result, its strength can be markedly decreased.

Moreover, when this method of producing the box body is adopted, the inner box of synthetic resin and the foamed polyurethane are bonded to each other through a layer of hard polyurethane, which has only been slightly foamed, if at all, at their interface. Since this hard polyurethane layer is weak, cracks can easily be formed in it because of temperature differentials or small shocks and these act on the synthetic resin of the inner box, by the "notch effect", and markedly decrease the strength of the inner box.

Various proposals have been made to prevent the strength of the synthetic resin of the inner box from being decreased when in contact with the foamed polyurethane, examples of such proposals include the following:

(a) coating an aqueous rubber latex to form a film on the side of the synthetic resin inner box which is contacted with the foamed polyurethane prior to injecting and foaming the polyurethane (Japanese Patent Publication No. 13,547/71);

(b) in place of the aqueous rubber latex of (a) using a fluorinated hydrocarbon-resistant film to form a composite material with the synthetic resin and vacuum-forming this composite material to the desired shape for the inner box (Japanese Patent Publication No. 13,550/71);

(c) using a three-layer ABS (acrylonitrile-butadiene-styrene) sheet comprising a middle layer of an acrylonitrile-rich ABS resin sandwiched between two outer layers of butadiene-rich ABS resin [Japanese Patent Application Kokai (i.e. as laid-open to public inspection) No. 101882/79].

However, all of these processes have the disadvantage that they complicate the production of the refrigerator box body and thus increase the cost.

We have now discovered an impact-resistant resin composition which has improved vacuum-formability and which can provide a moulded article having fewer variations in thickness from point to point and which is less susceptible to having its strength reduced by contact with foamed polyurethane.

Thus, the present invention provides an impact-resistant resin composition comprising: a graft polymer in which an aromatic alkenyl compound and an alkenyl cyanide compound are grafted on a rubbery polymer; and a matrix comprising a copolymer of an aromatic alkenyl compound and an alkenyl cyanide compound, characterized in that:

(a) the proporation of rubbery polymer in the impact resistant resin composition is from 10 to 30% by weight;

(b) the graft polymer has a degree of grafting of from 70 to 120% by weight;

(c) the matrix has an intrinsic viscosity of from 0.55 to 0.80 dl/g, measured at 30°C in methyl ethyl ketone; and

(d) the weight ratio of aromatic alkenyl compound to alkenyl cyanide compound in the impact-resistant resin composition is from 2.0 : 1 to 2.8 : 1.

The rubbery polymer used in the composition of the invention may be, for example, polybutadiene, an acrylonitrile-butadiene copolymer, a butadiene-styrene copolymer, polyisoprene, polychloroprene or an ethylene-propylenediene type rubber. It is possible to use a single one of these polymers or a mixture of any two or more. The content of the rubbery polymer in the impact-

2

resistant resin composition of the invention is at least 10% by weight, preferably at least 12% by weight, in order to achieve satisfactory impact resistance. On the other hand, in order to maintain a satisfactory heat distortion temperature and stiffness, the content of rubbery polymer should not be greater than 30% by weight, preferably not greater than 25% by weight.

The aromatic alkenyl compound used in the graft polymer and in the matrix of the composition of the invention may be, for example, styrene, $\alpha$-methylstyrene, dimethylstyrene, vinyltoluene or an alkoxystyrene. The alkenyl cyanide compound which is also used in the graft polymer and in the matrix is preferably acrylonitrile or methacrylonitrile. A single one of each of these types of monomer may be used alone or it is possible to use a combination of any two or more of each type of monomer. The matrix preferably consists essentially of the aromatic alkenyl compound and the alkenyl cyanide compound.

It is necessary that the graft polymer component of the composition of the invention should have a degree of grafting of from 70 to 120% by weight and preferably from 90 to 110% by weight. It is also necessary that the matric consisting essentially of the aromatic alkenyl compound and the alkenyl cyanide compound should have an intrinsic viscosity of from 0.55 to 0.80 dl/g, preferably from 0.60 to 0.75 dl/g, measured at 30°C in methyl ethyl ketone. If the degree of grafting of the graft polymer is less than 70% by weight or the intrinsic viscosity of the matrix is less than 0.55 dl/g, it is not possible to retain the good vacuum formability and good strength when in contact with foamed polyurethane, which are otherwise achieved by the present invention. On the other hand, if the degree of grafting exceeds 120% by weight, the rubbery polymer loses its rubbery character and the desired strength cannot be achieved, and, if the intrinsic viscosity exceeds 0.80 dl/g, the flow properties of the resin composition during processing deteriorate considerably, which is obviously undesirable.

Moreover, it is necessary, in the composition of the invention, that the weight ratio of aromatic alkenyl compound to alkenyl cyanide compound should be within the range of from 2.0 : 1 to 2.8 : 1, preferably from 2.1 : 1 to 2.6 : 1. If this weight ratio exceeds 2.8 : 1, it is difficult to maintain the good strength of the composition after it has been contacted with foamed polyurethane. On the other hand, if this ratio is less than 2.0 : 1, heat stability during moudling and processing decreases and this is likewise undesirable.

The impact-resistant resin composition of the invention can be prepared simply by adding a monomer mixture comprising the aromatic alkenyl compound and the alkenyl cyanide compound to a latex of the rubbery polymer and subjecting the resulting mixture to emulsion polymerization, as well as by other conventional graft polymerization methods, for example the bulk-suspension polymerization method, for solution polymerization method, the emulsion-bulk polymerization method or similar methods. For example, in the case of emulsion graft polymerization, we prefer to use a redox system comprising an organic peroxide and an iron salt as initiator. Suitable organic peroxides include cumene hydroperoxide, diisopropylbenzene hydroperoxide and p-menthane hydroperoxide. The iron salt may be a ferrous salt or a ferric salt, preferably the sulphate or chloride.

Where such a redox system is employed, the organic peroxide is preferably used in an amount of from 0.1 to 1.0 part by weight per 100 parts by weight of polymerizable monomers and the iron salt is preferably used in an amount of 0.001 to 0.1 part by weight, on the same basis.

Any emulsifier commonly used for emulsion polymerization may be used in this polymerization process, but we generally prefer a sodium or potassium salt of a disproportionated rosin acid or hydrogenated rosin acid. Salts of fatty acids having from 8 to 18 carbon atoms may also be used.

If necessary, a polymerization regulator may be incorporated in the reaction system; such regulators include, for example: long chain mercaptans, such as normal or tertiary dodecylmercaptans; or a terpene mixture consisting of dipentene, terpinolene, $\alpha$-terpinene, and a small amount of other cyclic terpenes. Such a regulator may be employed in an amount of from 0 to 1.0 part by weight.

The polymerization temperature is preferably in the range of from 40°C to 95°C — if the temperature is lower than 40°C, it is difficult to carry out the reaction whereas, if the temperature exceeds 95°C, the polymerization system becomes unstable and a coagulum tends to form.

Apart from the above-mentioned system of production under appropriate polymerization conditions, it is also possible to employ a process often used in this field which comprises first preparing a rubbery resin composition (having a high rubbery polymer content) which contains a graft polymer having a degree of grafting within the specified range and then blending it with a copolymer of an aromatic alkenyl compound and an alkenyl cyanide compound to regulate the rubbery polymer content.

If necessary, a diorganopolysiloxane having a particular viscosity and/or a metal salt of a fatty acid may be added to the resin composition, which enables the excellent ability of the composition to retain its strength after contact with foamed polyurethane to be exhibited to the highest possible extent. Preferred diorganopolysiloxanes for this purpose include those having a viscosity within the range of from 5 to 100,000 mm²/sec (centistrokes), more preferably from 5,000 to 50,000 mm²/sec (centistrokes), at 25°C. The diorganopolysiloxane may have at least one alkyl, aryl and/or vinyl substituent and a single such diorganopolysiloxane may be used or a mixture of two or more may be used. The amount of diorganopolysiloxane is preferably from 0.01 to 2% by weight, more preferably from 0.05 to 1% by weight, based on the weight of the impact-resistant resin composition. Suitable metal salts of fatty acids include metal salts of straight chain saturated fatty acids having at least 12 carbon atoms, for example lauric acid, palmitic acid or stearic acid. The metal is preferably magnesium calcium, strontium, barium, zinc, cadmium, aluminium, tin or lead. A single such salt, or a mixture of any two or more thereof, may be used. The amount of salt is preferably from 0.1 to 3% by weight based on the weight of the impact-resistant resin composition; an amount within the range of from 0.5 to 1.5% by weight gives best results.

The way in which the resin composition of the invention is blended with the additives suggested above is not critical and any conventional method of blending may be employed. For example, predetermined quantities of the appropriate materials may be weighed out and then blended together by means of a Henschel mixer, a tumbler or similar blender or melt-blended by means of a hot roll, a Banbury mixer or similar apparatus. Clearly, as is conventional in the art, stabilizers, colours and other additives may, if necessary, be added during this blending.

The invention is further illustrated by the following Examples, in which the performances were evaluated of acrylonitrile-butadiene-styrene resins (hereinafter referred to as "ABS resin") comprising a rubbery polymer, an aromatic alkenyl compound (styrene) and an alkenyl cyanide compound (acrylonitrile).

## Examples

The powdery ABS resins of Samples No. 1—7 shown in Table 1 were prepared by a conventional emulsion polymerization method in a 10 litre glass reaction vessel.

The degree of grafting shown in Table 1 was measured by adding a predetermined amount (A) of the powdery ABS resin to acetone, thereby completely dissolving free acylonitrile-styrene copolymer, separating, by means of a centrifuge, the insoluble fraction and weighing it to give a weight (B), and then calculating the degree of grafting according to the following equation:

$$\text{Degree of grafting} = \frac{B-A \times (\text{Fraction of rubber in ABS resin})}{A \times (\text{Fraction of rubber in ABS resin})} \times 100$$

## Examples 1—4

Each of the powdery ABS resins of Samples No. 1, 2, 3 and 4 was melt-blended and pelletized by means of a 50 mm $\phi$ extruder. The pellets thus obtained were formed into a sheet having a thickness of 1.5 mm and a width of 400 mm by means of a 40 mm $\phi$ extruder equipped with a T-die. Strip-formed flat plates having a width of 5 mm and a length of 110 mm were cut from this sheet and used to evaluate vacuum-formability.

The test piece was placed in a thermostatically controlled chamber having a double glazed front window through which the interior of the chamber could be observed. The internal temperature of the chamber was controlled to 180°C. The upper end only of the test piece was fixed in the chamber with a clamp and it was allowed to hang vertically downwards. After 5 minutes, the position of the lower end of the test piece was measured, thus giving a value for the sag of the test piece due to its own weight; this represented a guide to the vacuum-formability of the piece. The greater value of this sag, the greater will be the sag of the resin sheet when the sheet is heated during vacuum forming. If the distance from the heater to different parts of the surface of the resin sheet varies greatly, heating of the sheet is extremely uneven. If vacuum-forming is carried out under such conditions, variations in thickness from point to point become great. Accordingly, the greater the value of the sag as measured above, the greater the variation in thickness from point to point of a vacuum-formed moulded article, and this is undesirable.

Furthermore, in order to measure the strength of the sheet after contact with foamed polyurethane, square flat plates having sides of length 150 mm were prepared from the same extruded sheet. These flat plates were placed on the open end of a hollow rectangular box having a side length of 150 mm and a depth of 30 mm and the ingredients for a foamed polyurethane (comprising as main ingredients modified tolylene diisocyanate and a polyether having a hydroxy value of 400 and a molecular weight of 3,300) were poured into the cavity of the box and allowed to foam. This produced a flat plate having a foamed polyurethane bonded to one of its surfaces. After conditioning the plate in a low temperature chamber maintained at −30°C, the drop weight impact strength at this temperature was measured using a Dupont drop-weight tester. In this measurement, the plate was fixed so that the ABS resin sheet was uppermost and the striking member used had a tip radius of 0.25 inch (0.63 cm).

## Example 5

1.0 PHR of magnesium stearate were added to the powdery ABS resin of Sample No. 3 and stirred and mixed by means of a Henschel mixer, after which the procedure of Examples 1—4 was repeated.

## Example 6

The procedure of Example 5 was repeated, except that the magnesium stearate was replaced by aluminium stearate.

4

## Example 7

The procedure of Example 5 was repeated, except that the magnesium stearate was replaced by 0.2 PHR of a polydimethylsiloxane having a viscosity of 10,000 mm²/sec (centistrokes).

## Example 8

The procedure of Example 5 was repeated, except that an additional 0.2 PHR of a polydimethylsiloxane having a viscosity of 10,000 mm²/sec (centistrokes) was added.

## Comparative Examples 1—3

Each of the powdery ABS resins of Samples Nos. 5, 6 and 7 was melt-blended and pelletized by means of a 50 mm φ extruder. Thereafter the procedure of Examples 1—4 was repeated.

## Comparative Example 4

To the powdery ABS resin of Sample No. 6 was added 1.0 PHR of magnesium stearate, and the resulting mixture was stirred by means of a Henschel mixer, after which the procedure of Examples 1—4 was repeated.

## Comparative Example 5

The procedure of Compariative Example 4 was repeated, except that the magnesium stearate was replaced by aluminium stearate.

## Comparative Example 6

The procedure of Comparative Example 4 was repeated, except that the magnesium stearate was replaced by 0.2 PHR of a polydimethylsiloxane having a viscosity of 10,000 centistrokes.

## Comparative Example 7

The procedure of Comparative Example 4 was repeated, except that an additional 0.2 PHR of a polydimethylsiloxane having a viscosity of 10,000 centistrokes was added.

The results of the evaluation of drop weight impact strength for the products of Examples 1—8 and Comparative Examples 1—7 are shown in Table 2, from which it is apparent that the resin compositions of the invention have good vacuum-formability and maintain their strength well in contact with foamed polyurethane.

TABLE 1

| Sample No. | Rubber Content (1) | S : A ratio (2) | Intrinsic Viscosity (3) | Degree of grafting % |
|---|---|---|---|---|
| 1 | 13 | 2.2 | 0.61 | 103 |
| 2 | 15 | 2.45 | 0.77 | 105 |
| 3 | 18 | 2.67 | 0.70 | 99 |
| 4 | 21 | 2.8 | 0.68 | 94 |
| 5 | 15 | 3.2 | 0.70 | 96 |
| 6 | 18 | 2.8 | 0.68 | 53 |
| 7 | 21 | 2.8 | 0.46 | 95 |

Notes: (1) Rubber content of ABS resin (% by weight),

(2) Styrene : acrylonitrile weight ratio,

(3) Intrinsic viscosity $[\eta]$ of matrix, measured at 30°C in methyl ethyl ketone (dl/g).

TABLE 2

| Example No. | Sample No. (4) | Sag (5) | Impact strength (6) |
|---|---|---|---|
| 1 | 1 | 11 | 12 |
| 2 | 2 | 12 | 9 |
| 3 | 3 | 10 | 13 |
| 4 | 4 | 7 | 14 |
| 5 | 3 | 10 | 17 |
| 6 | 3 | 9 | 16 |
| 7 | 3 | 9 | 18 |
| 8 | 3 | 8 | 21 |
| Comp. 1 | 5 | 17 | 2 or less |
| Comp. 2 | 6 | 18 | 2 or less |
| Comp. 3 | 7 | 21 | 2 or less |
| Comp. 4 | 6 | 17 | 3 |
| Comp. 5 | 6 | 18 | 3 |
| Comp. 6 | 6 | 17 | 4 |
| Comp. 7 | 6 | 16 | 5 |

Notes:

(4) Sample No. of ABS resin,

(5) Sag at 180°C after 5 minutes (mm),

(6) Du Pont drop-weight impact strength (kg-cm).

## Claims

1. An impact-resistant resin composition comprising: a graft polymer in which an aromatic alkenyl compound and an alkenyl cyanide compound are grafted on a rubbery polymer; and a matrix comprising a copolymer of an aromatic alkenyl compound and an alkenyl cyanide compound, characterized in that:
(a) the proportion of rubbery polymer in said impact-resistant resin composition is from 10—30% by weight;
(b) the graft polymer has a degree of grafting of from 70 to 120% by weight;
(c) the matrix has an intrinsic viscosity of from 0.55 to 0.80 dl/g, measured at 30°C in methyl ethyl ketone; and
(d) the weight ratio of the aromatic alkenyl compound to the alkenyl cyanide compound in the impact resistant resin composition is from 2.0 : 1 to 2.8 : 1.

2. A composition according to Claim 1, in which said rubbery polymer is one or more of polybutadiene, an acrylonitrile-butadiene copolymer, a butadiene-styrene copolymer, polyisoprene, polychloroprene or an ethylene-propylene-diene type rubber.

3. A composition according to Claim 1 or Claim 2, in which the proportion of rubbery polymer in the composition is from 12 to 25% by weight.

4. A composition according to any one of Claims 1 to 3, in which said aromatic alkenyl compound is one or more of styrene, α-methylstyrene, dimethylstyrene, vinyltoluene and an alkoxystyrene.

5. A composition according to any one of the preceding Claims, wherein said alkenyl cyanide compound is acrylonitrile and/or methacrylonitrile.

# 0 043 273

6. A composition according to any one of Claims 1 to 3, wherein said graft polymer comprises a polymer in which styrene and acrylonitrile are grafted onto a rubbery polymer and said matrix consists essentially of a styrene-acrylonitrile copolymer.

7. A composition according to any one of the preceding Claims, wherein said degree of grafting is from 90 to 110% by weight.

8. A composition according to any one of the preceding Claims, wherein said matrix has an intrinsic viscosity of from 0.60 to 0.75 dl/g, measured at 30°C in methyl ethyl ketone.

9. A composition according to any one of the preceding Claims, wherein the weight ratio of said aromatic alkenyl compound to said alkenyl cyanide compound in the resin composition is from 2.1 : 1 to 2.6 : 1.

10. A composition according to any one of the preceding Claims, additionally comprising from 0.01 to 2% by weight (based on the weight of the impact-resistant resin composition) of a diorganopolysiloxane having a viscosity of 5—100,000 mm²/sec (centistrokes) at 25°C.

11. A composition according to Claim 10, wherein the organic substituent of said diorganopolysiloxane is one or more alkyl, aryl or vinyl groups.

12. Zusammensetzung nach einem der vorstehenden Ansprüche, dadurch gekennzeichnet, daß sie zusätzlich von 0,1 bis 3 Gewichtsprozent (bezogen auf das Gewicht der schlagfesten Harzzusammensetzung) eines Metallsalzes einer Fettsäure mit mindestens 12 Kohlenstoffatomen enthält.

13. A box body for a refrigerator formed from an impact-resistant resin composition as claimed in any one of Claims 1 to 12.

## Patentansprüche

1. Schlagfeste Harzzusammensetzung, enthaltend ein Pfropfpolymeres, in dem eine aromatische Alkenylverbindung und ein Alkenylcyanid auf ein kautschukartiges Polymeres aufgepfropft sind, und eine Matrix, die ein Copolymeres einer aromatischen Alkenylverbindung und eines Alkenylcyanids enthält, dadurch gekennzeichnet, daß

a) der Anteil des kautschukartigen Polymeren in der genannten schlagfesten Harzzusammensetzung von 10 bis 30 Gewichtsprozent beträgt,

b) das Propfpolymere einen Pfropfgrad von 70 bis 120 Gewichtsprozent hat,

c) die Matrix eine Viskositätszahl von 0,55 bis 0,80 dl/g hat, gemessen bei 30°C in Methylethylketon, und

d) das Gewichtsverhältnis von aromatischer Alkenylverbindung zu Alkenylcyanid in der schlagfesten Harzzusammensetzung von 2,0 : 1 bis 2,8 : 1 beträgt.

2. Zusammensetzung nach Anspruch 1, dadurch gekennzeichnet, daß das kautschukartige Polymere Polybutadien, ein Acrylnitril-Butadien-Copolymeres, ein Butadien-Styrol-Copolymeres, Polyisopren, Polychloropren und/oder ein Ethylen-Propylen-Dien-Kautschuk ist.

3. Zusammensetzung nach Anspruch 1 oder 2, in der der Anteil des kautschukartigen Polymeren in der Zusammensetzung von 12 bis 25 Gewichtsprozent beträgt.

4. Zusammensetzung nach einem der Ansprüche 1 bis 3, dadurch gekennzeichnet, daß die genannte aromatische Alkenylverbindung Styrol, $\alpha$-Methylstyrol, Dimethylstyrol, Vinyltoluol und/oder Alkoxystyrol ist.

5. Zusammensetzung mach einem der vorstehenden Ansprüche, dadurch gekennzeichnet, daß das genannte Alkenylcyanid Acrylnitril und/oder Methacrylnitril ist.

6. Zusammensetzung nach einem der Ansprüche 1 bis 3, dadurch gekennzeichnet, daß das genannte Pfropfpolymere ein Polymeres enthält, in dem Stryol und Acrylnitril auf ein kautschukartiges Polymeres aufgepfropft sind und die genannte Matrix im wesentlichen aus einem Styrol-Acrylnitril-Copolymeren besteht.

7. Zusammensetzung nach einem der vorstehenden Ansprüche, dadurch gekennzeichnet, daß der genannte Pfropfgrad von 90 bis 110 Gewichtsprozent beträgt.

8. Zusammensetzung nach einem der vorstehenden Ansprüche, dadurch gekennzeichnet, daß genannte Matrix eine Viskositätzahl von 0,60 bis 0,75 dl/g hat, gemessen bei 30°C in Methylethylketon.

9. Zusammensetzung nach einem der vorstehenden Ansprüche, dadurch gekennzeichnet, daß das Gewichtsverhältnis der genannten aromatischen Alkenylverbindung zum genannten Alkenylcyanid in der Harzzusammensetzung von 2,1 : 1 bis 2,6 : 1 beträgt.

10. Zusammensetzung nach einem der vorstehenden Ansprüche, dadurch gekennzeichnet, daß sie zusätzlich 0,01 bis 2 Gewichtsprozent (bezogen auf das Gewicht der schlagfesten Harzzusammensetzung) eines Diorganopolysiloxans mit einer Viskosität von 5 vis 100,000 mm²/s (Centistokes) bei 25°C enthält.

11. Zusammensetzung nach Anspruch 10, dadurch gekennzeichnet, daß die organischen Substituenten des genannten Diorganopolysiloxans eine oder mehrere Alkyl-, Aryl- oder Vinyl-gruppen sind.

12. Zusammensetzung nach einem der vorstehenden Ansprüche, dadurch gekennzeichnet, daß sie zusätzlich von 0,1 bis 3 Gewichtsprozent (bezogen auf das Gewicht der schlagfesten Harzzusammensetzung) eines Metallsalzes einer Fettsäure mit mindestens 12 Kohlenstoffatomen enthält.

13. Kühlschrank-Gehäuse, hergestellt aus einer schlagfesten Harzzusammensetzung gemäß einem der Ansprüche 1 bis 12.

**Revendications**

1. Composition de résine résistant aux chocs, comprenant un polymère greffé dans lequel un composé alcénylique aromatique et un composé de cyanure d'alcényle sont greffés sur un polymère caoutchouteux et une matrice comprenant un copolymère d'un composé alcénylique aromatique et un composé de cyanure d'alcényle, caractérisée en ce que

a) la proportion de polymère caoutchouteux dans ladite composition de résine résistant au choc est de 10 à 30% en poids;
b) le polymère greffé a un degré de greffage de 70 à 120% en poids;
c) la matrice a une viscosité intrinsèque de 0,55 à 0,80 dl/g, mesurée à 30°C dans la méthyl-éthyl-cétone; et
d) le rapport en poids du composé alcénylique aromatique au composé de cyanure d'alcényle dans la composition de résine résistant au choc est de 2,0 : 1 à 2,8 : 1.

2. Composition selon la revendication 1, dans laquelle ledit polymère caoutchouteux est constitué par un ou plusieurs des composés suivants : un polybutadiène, un copolymère acrylonitrile-butadiène, un copolymère butadiène-styrène, un polyisoprène, un polychloroprène ou un caoutchouc du type éthylène-propylène-diène.

3. Composition selon la revendication 1 ou la revendication 2, dans laquelle la proportion de polymère caoutchouteux dans la composition est de 12 à 25% en poids.

4. Composition selon l'une quelconque des revendications 1 à 3, dans laquelle ledit composé alcénylique aromatique est constitué par un ou plusieurs des composés suivants : styrène, alpha-méthylstyrène, diméthylstyrène, vinyl-toluène et un alcoxystyrène.

5. Composition selon 1'une quelconque des revendications précédentes, dans laquelle ledit composé de cyanure d'alcényle est l'acrylonitrile et/ou le méthacrylonitrile.

6. Composition selon l'une quelconque des revendications 1 à 3, dans laquelle ledit polymère greffé comprend un polymère dans lequel le styrène et l'acrylonitrile sont greffés sur un polymère caoutchouteux et ladite matrice consiste essentiellement en un copolymère styrène-acrylonitrile.

7. Composition selon l'une quelconque des revendications précédentes, dans laquelle ledit degré de greffage est de 90 à 110% en poids.

8. Composition selon l'une quelconque des revendications précédentes, dans laquelle ladite matrice a une viscosité intrinsèque de 0,60, à 0,75 dl/g, mesurée à 30°C dans la méthyl-éthyl-cétone.

9. Composition selon l'une quelconque des revendications précédentes, dans laquelle la rapport en poids dudit composé alcénylique aromatique audit composé de cyanure d'alcényle dans la composition de résine est de 2,1 : 1 à 2,6 : 1.

10. Composition selon l'une quelconque des revendications prédédentes, comprenant de plus de 0,01 à 2% en poids (sur la base du poids de la composition de résine résistant au choc) d'un diorganopolysiloxane ayant une viscosité de 5 à 100,000 $mm^2/s$ (centistokes) à 25°C.

11. Composition selon la revendication 10, dans laquelle le substituant organique dudit diorganopolysiloxane est constitué par un ou plusieurs groupes alkyle, aryle ou vinyle.

12. Composition selon l'une quelconque des revendications précédentes, comprenant de plus de 0,1 à 3% en poids (sur la base du poids de la composition de résine résistant au choc) d'un sel métallique d'un acide gras ayant au moins 12 atomes de carbone.

13. Corps de coffre de réfrigérateur formé à partir d'une composition de résine résistant aux chocs selon l'une quelconque des revendications 1 à 12.